# EUROPEAN PATENT SPECIFICATION

(11) **EP 2 972 595 B1**
(45) Date of publication and mention of the grant of the patent: **21.12.2016**
(21) Application number: 14715504.8
(22) Date of filing: 12.03.2014
(51) Int. Cl.: G03H 1/22, G03H 1/08, G02B 27/00

(54) **IMAGE CORRECTION USING RECONFIGURABLE PHASE MASK**
BILDKORREKTUR MIT REKONFIGURIERBARER PHASENMASKE
CORRECTION D'IMAGE UTILISANT UN MASQUE DE PHASE RECONFIGURABLE

(30) Priority: 14.03.2013 US 201313829540
(43) Date of publication of application: 20.01.2016
(73) Proprietor: Microsoft Technology Licensing, LLC, Redmond, WA 98052 (US)
(72) Inventor: GEORGIOU, Andreas, Redmond, Washington 98052-6399 (US); KOLLIN, Joel, Redmond, Washington 98052-6399 (US); TRAVIS, Adrian, Redmond, Washington 98052-6399 (US); HEIL, Stephen, Redmond, Washington 98052-6399 (US); LANIER, Jaron, Redmond, Washington 98052-6399 (US); BURGER, Doug, Redmond, Washington 98052-6399 (US)
(74) Representative: Fischer, Michael Maria
(86) International application number: PCT/US2014/024471
(87) International publication number: WO 2014/159621

(56) References cited:
- GB-A- 2 482 864
- US-A1- 2008 192 312
- US-A1- 2008 198 431
- US-A1- 2012 224 062

## Description

### BACKGROUND

A display may use a waveguide to display an image. Light transmitted through the waveguide may reflect many times within the waveguide before exiting the waveguide. The effect that any imperfections of the waveguide may have on transmitted light may increase with each reflection. Because the light may reflect many times, even relatively minor imperfections in the waveguide can severely affect image quality.

One way to improve image quality is to construct a large and highly accurate waveguide. However, this approach increases the size of the waveguide and the size of the display. Further, the cost of fabrication generally is inversely proportional to the accuracy of the waveguide.

GB 2 482 864 A discloses a holographic waveguide display with distortion compensation.

US 2012/0224062 A1 discloses head up displays. It is described a road vehicle contact-analogue head up display (HUD) comprising: a laser-based virtual image generation system to provide a 2D virtual image; exit pupil expander optics to enlarge an eye box of the HUD; a system for sensing a lateral road position relative to the road vehicle and a vehicle pitch or horizon position; a symbol image generation system to generate symbology for the HUD; and an imagery processor coupled to the symbol image generation system, to the sensor system and to said virtual image generation system, to receive and process symbology image data to convert this to data defining a 2D image for display dependent on the sensed road position such that when viewed the virtual image appears to be at a substantially fixed position relative to said road; and wherein the virtual image is at a distance of at least 5m from said viewer.

US 2008/0198431 A1 discloses a projection device and method for holographic reconstruction of scenes.

### SUMMARY

Described herein are techniques for improving image fidelity of a waveguide display system. The present invention is directed to a display device as defined in claim 1, a corresponding method as recited in claim 5, and a storage machine defined in claim 10. The display device includes a waveguide, a reconfigurable phase mask, and a controller. The controller dynamically reconfigures the reconfigurable phase mask so as to modulate display light in accordance with a detected position of an eye and/or a parameter for a shape of the waveguide. The waveguide transmits the modulated display light.

This Summary is provided to introduce a selection of concepts in a simplified form that are further described below in the Detailed Description.

### BRIEF DESCRIPTION OF THE DRAWINGS

FIG. 1 shows an example waveguide display system in accordance with an embodiment of the present disclosure.
FIG. 2 illustrates an example computing system in accordance with an embodiment of the present disclosure.
FIGS. 3 - 5 illustrate example processes for image correction.

### DETAILED DESCRIPTION

The following embodiments and drawings are not all claimed, they are included to help understanding the context of the invention. Among the following embodiments and drawings, the controller comprised in the claimed invention is at least arranged to control the reconfigurable phase mask based on a parameter for a shape of the waveguide to thereby mitigate for waveguide distortion.

This disclosure describes techniques for image correction. In various embodiments, image fidelity of a waveguide display system is improved by compensating for waveguide distortion and/or using the viewing position of an eye to customize a display image.

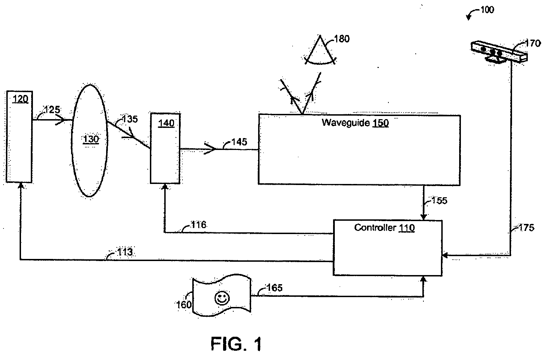

FIG. 1 shows an overview of example waveguide display system 100. As illustrated in FIG. 1, the system 100 may include a controller 110, display device 120, optic device 130, reconfigurable phase mask 140, and a waveguide 150. The controller 110 accepts a source image 160 and a parameter for a shape of the waveguide 150 and/or the position of the eye 180. Using at least some of this information, the controller 110 computes a hologram and an illumination profile that maximizes the perceived image fidelity to the user. The hologram and/or the illumination profile may be determined for the source image 160 to provide the opposite distortion of the waveguide.

The controller 110 may pass a received source image 160 with image intensity 165 to the display device 120 having an unmodified intensity. In some embodiments, the controller 110 may compute an illumination profile for the display device and/or a phase profile for the reconfigurable phase mask in accordance with a position of the eye 180 and/or a parameter for a shape of the waveguide 150. Such profiles may utilize parameters 155 for the shape of the waveguide 150 and/or information 175 about the head or eye position.

The information about the head or eye position 180 may be captured or estimated from a device such as a camera 170. For example, the position of the user's eye may be described with x, y, and z coordinates with tilt and tip orientation information.

The parameters 155 may include information about properties of the waveguide including a shape associated with an angle of an incident ray and a waveguide entrance position.

The controller 110 may provide an intensity distribution 113 across the display device determined from the illumination profile and/or a phase distribution 116 across the reconfigurable phase mask determined from the phase profile. In various embodiments, the controller 110 determines that light from a pixel would not arrive to the user's eye because of the position of the eye and/or the shape of the waveguide. In such instances, the effect of that pixel may be created by deflecting light from one or more other pixels.

In some embodiments, the display device 120 may receive the image with an image intensity distribution as specified by the illumination profile. The display device 120 may be a conventional display device such as a liquid crystal display (LCD) illuminated by light from a laser. For example, the display device 120 may be an amplitude modulating display utilizing one or more lasers as a light source. In some embodiments, the display device 120 may comprise N pixels, the intensity of an arbitrary Nth pixel determined by a value p_{N}. The value p_{N} may be indicated by the illumination profile. The image intensity distribution 113 can be the same as the image intensity 165, or the illumination profile may modify the intensity of one or more pixels.

The optic device 130 optionally receives one or more rays 125 from N pixels of the display device 120. In some embodiments, each ray from each of the N pixels is collimated or imaged by the optic device 130 such that a position of a pixel on the display device 120 is transformed after passing through the optic device 130. In some embodiments, the optic device 130 includes a relay lens or relay optics. Any suitable type of optic device 130 may be used to perform the desired transformation.

In some embodiments, the reconfigurable phase mask 140 receives one or more transformed rays 135 from the optic device 130. The transformed rays 135 enter the reconfigurable phase mask at points where the rays are parallel. The reconfigurable phase mask may provide a distortion that is opposite to a distortion of the waveguide 150 and/or otherwise works to mitigate imperfections of the waveguide. The reconfigurable phase mask 140 comprises a spatial light modulator (SLM). The SLM modulating at least a phase of the transformed rays 135. The reconfigurable phase mask 140 may be further configured to divert, divide or transmit the transformed rays 135.

A hologram as implemented by the reconfigurable phase mask may perform many localized operations onto the incident beam(s). The hologram may be determined using the phase profile. The phase profile includes information for adjusting the phase of the transformed rays 135 to control each ray's input to the waveguide 150.

In some embodiments, the waveguide 150 receives the predistorted image 145 from the reconfigurable phase mask 140. The rays from the predistorted image predictably propagate within the waveguide 150, and a single ray may split into many with each segment of the single ray emerging from different positions along the waveguide 150. The user may see some but not all of the rays.

The above describe operation of the system is in the context of a single color. A color system may work in the same way, but with three colors displayed time sequentially via the same system, or with three colors displayed in parallel via three different systems.

In some embodiments, the methods and processes described herein may be tied to a computing system of one or more computing devices. In particular, such methods and processes may be implemented as a computer-application program or service, an application-programming interface (API), a library, and/or other computer-program product.

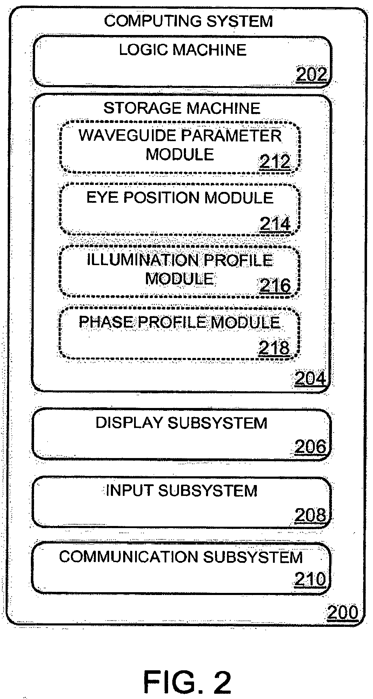

FIG. 2 schematically shows a non-limiting embodiment of a computing system 200 that can enact one or more of the methods and processes described herein. Computing system 200 is shown in simplified form. Computing system 200 may take the form of one or more augmented reality head mounted display control devices, display controllers, gaming consoles, personal computers, server computers, tablet computers, home-entertainment computers, network computing devices, mobile computing devices, mobile communication devices (e.g., smart phone), and/or other computing devices. For example, computing system 200 may include controller 110 of FIG. 1.

Computing system 200 includes a logic machine 202 and a storage machine 204. Computing system 200 may optionally include an integrated display subsystem 206 (e.g., display device 120, optic device 130, reconfigurable phase mask 140, and waveguide 150), input subsystem 208, communication subsystem 210, and/or other components not shown in FIG. 2.

Logic machine 202 includes one or more physical devices configured to execute instructions. For example, the logic machine may be configured to execute instructions that are part of one or more applications, services, programs, routines, libraries, objects, components, data structures, or other logical constructs. Such instructions may be implemented to perform a task, implement a data type, transform the state of one or more components, achieve a technical effect, or otherwise arrive at a desired result.

The logic machine may include one or more processors configured to execute software instructions. Additionally or alternatively, the logic machine may include one or more hardware or firmware logic machines configured to execute hardware or firmware instructions. Processors of the logic machine may be single-core or multi-core, and the instructions executed thereon may be configured for sequential, parallel, and/or distributed processing. Individual components of the logic machine optionally may be distributed among two or more separate devices, which may be remotely located and/or configured for coordinated processing. Aspects of the logic machine may be virtualized and executed by remotely accessible, networked computing devices configured in a cloud-computing configuration.

Storage machine 204 includes one or more physical devices configured to hold instructions executable by the logic machine to implement the methods and processes described herein. For example, logic machine 202 may be in operative communication with storage machine 204. When such methods and processes are implemented, the state of storage machine 204 may be transformed-e.g., to hold different data.

Storage machine 204 may include removable and/or built-in devices. Storage machine 204 may include optical memory (e.g., CD, DVD, HD-DVD, Blu-ray Disc, etc.), semiconductor memory (e.g., RAM, EPROM, EEPROM, etc.), and/or magnetic memory (e.g., hard-disk drive, floppy-disk drive, tape drive, MRAM, etc.), among others. Storage machine 204 may include machine-readable volatile, nonvolatile, dynamic, static, read/write, read-only, random-access, sequential-access, location-addressable, file-addressable, and/or content-addressable devices.

The storage machine 204 may be used to store any number of functional components that are executable by the logic machine. Thus, the storage machine 204 may, for example, store an operating system. In various embodiments, a waveguide parameter module 212, eye position module 214, illumination profile module 216, and/or phase profile module 218 may be stored by the storage machine 204.

In some embodiments, the waveguide parameter module 212 is configured to receive information about one or more parameters of the waveguide. In some embodiments, the one or more parameters may include the shape and/or imperfections of the waveguide. In some embodiments, the parameters may include how the light propagates within the waveguide. Any type of information about the waveguide may be provided as parameters to the waveguide parameter module 212.

In some embodiments, eye position module 214 may be configured to receive and/or determine the position of the eye(s) of the user. As stated above, either or both of the eye and head position may be used. In some embodiments, the head position may be used to determine the eye position.

In various embodiments, the illumination profile module 216 is configured to determine the intensity distribution across the display device. The illumination profile may be determined using one or more of the eye position information and waveguide parameters. Any suitable methods may be used to specify the intensity needed to produce the desired results.

In some embodiments, the phase profile module 218 may be configured to determine the phase distribution across the hologram. The phase profile may be determined using one or more of the eye position information and waveguide parameters provided by the waveguide parameter module 212 and/or the eye position module 214. Furthermore, in some embodiments the phase profile may be determined to accommodate visual limitations of a viewer. Any suitable methods, such as using a profile, may be used to specify the phase needed at the hologram to produce the desired results.

It will be appreciated that storage machine 204 includes one or more physical devices. However, aspects of the instructions described herein alternatively may be propagated by a communication medium (e.g., an electromagnetic signal, an optical signal, etc.) that is not held by a physical device for a finite duration.

Aspects of logic machine 202 and storage machine 204 may be integrated together into one or more hardware-logic components. Such hardware-logic components may include field-programmable gate arrays (FPGAs), program- and application-specific integrated circuits (PASIC / ASICs), program- and application-specific standard products (PSSP / ASSPs), system-on-a-chip (SOC), and complex programmable logic devices (CPLDs), for example.

Display subsystem 206 may be used to present a visual representation of data held by storage machine 204. As the herein described methods and processes change the data held by the storage machine, and thus transform the state of the storage machine, the state of display subsystem 206 may likewise be transformed to visually represent changes in the underlying data. Display subsystem 206 may include one or more display components, including, but not limited to display device 120, optic device 130, reconfigurable phase mask 140, and waveguide 150. Such display components may be combined with logic machine 202 and/or storage machine 204 in a shared enclosure, or such display components may be implemented as a peripheral display device (e.g., an augmented reality head mounted display that receives image information from an off-board controller).

When included, input subsystem 208 may comprise or interface with one or more user-input devices such as a keyboard, mouse, touch screen, microphone, game controller, and/or camera (e.g., camera 170). In some embodiments, the input subsystem may comprise or interface with selected natural user input (NUI) componentry. Such componentry may be integrated or peripheral, and the transduction and/or processing of input actions may be handled on- or off-board. Example NUI componentry may include a microphone for speech and/or voice recognition; an infrared, color, stereoscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 210 may be configured to communicatively couple computing system 200 with one or more other computing devices. Communication subsystem 210 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 200 to send and/or receive messages to and/or from other devices via a network such as the Internet.

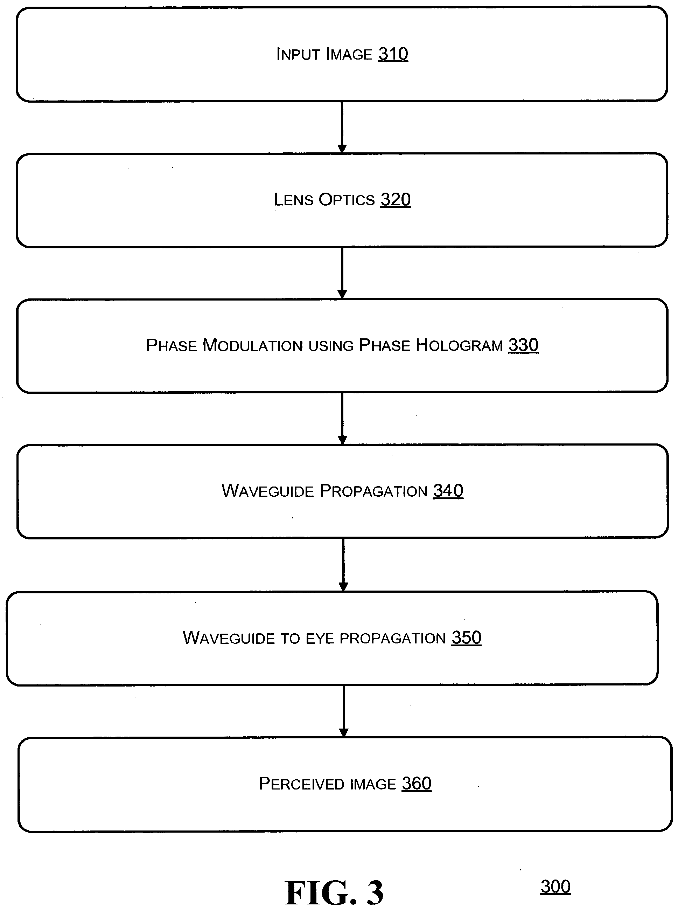

FIG. 3 is a flow diagram of an illustrative method 300 for image correction. The method 300 is illustrated as a collection of blocks in a logical flow graph, which represents a sequence of operations that may be implemented in hardware, software, firmware or a combination thereof. In the context of software, the blocks represent computer-executable instructions that, when executed by logic machine 202, cause the logic machine 202 to perform the recited operations. Generally, computer-executable instructions include routines, programs, objects, components, data structures, and the like that perform particular functions or implement particular abstract data types. The order in which the operations are described is not intended to be construed as a limitation, and any number of the described blocks can be combined in any order and/or in parallel to implement the process. Further, operations that are not illustrated may be executed as part of the method. Further, the operations may, but need not necessarily, be implemented using the arrangement of FIGs. 1 and/or 2. Consequently, by way of explanation, and not limitation, the method is described in the context of FIGs. 1-2. All methods described herein should be interpretted in this manner.

At 310, an input image is provided at the illuminated display to form a projected image. The image may be represented by an array of N pixels having intensity values [P₁ P₂ P₃... P_{N}].

At 320, the projected light forming the image is optionally provided by the display to lens optics where it is refracted by the lens optics. The refracted light is provided as illumination to a reconfigurable phase mask (also referred to as a phase hologram).

At 330, another transformation is performed to the received values by performing phase modulation based on at least one of a position of a user's eye or a parameter for a shape of a waveguide. In some embodiments, a phase hologram [h₁, h₂, h₃... h_{M}] is used to modulate the phase. The phase modulation controls the input position of light at the waveguide. In some embodiments, the hologram may be adjusted to alter the input position of light at the waveguide. It is to be understood that such modulation may be updated responsive to a changing position of the user's eye. In other words, the position of the eye may be tracked, and the phase modulation may be dynamically adapted in accordance with the tracked position of the eye.

At 340, the waveguide input is transformed again by the waveguide propagation based at least in part on the waveguide properties. In some embodiments, the waveguide properties may be described using the angle of the incident ray (from 1 to N) and the position on the waveguide entrance (e.g., 1 to M where M should be similar to the number of hologram pixels).

At 350, light propagates from the waveguide to the eye(s).

At 360, the eye perceives the image based on the above transformations. In some embodiments, the position of the user's eye may be described with five parameters, x, y, z, tilt and tip. Any suitable method may be used to describe the position of the eye or the head of the user.

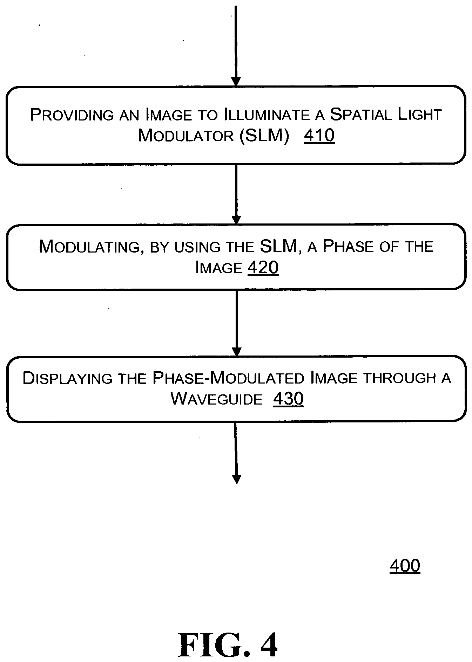

FIG. 4 illustrates an example process for image correction 400 using a spatial light modulator (SLM), in accordance with various embodiments.

At 410, an image is provided to illuminate the SLM. The image may be generated using a laser, for example. Optionally, the light rays from the image may be received by the SLM after passing through an optical lens as described above. In some embodiments, the light rays are parallel when arriving at the SLM.

At 420, a phase of the image is modulated based at least in part on one of a position of an eye or a parameter for a shape of a waveguide. In some embodiments, the image is modulated according to the hologram that is provided at the SLM. The hologram may be determined using a phase profile as described above.

At 430, the phase-modulated image is displayed through a waveguide. The phase-modulated image may be improved relative to an image that is not phase-modulated because the SLM cancels out the distortions of the waveguide.

One or more values may be determined to provide the intensity and the phase to compensate for an imperfection of the waveguide and the position of the eye. For example, the values may be computed such that light from a first pixel does not arrive to the eye. Instead, an effect of the first pixel may be created by deflecting light from a second pixel. In addition, the values may be used to determine at least a hologram phase profile.

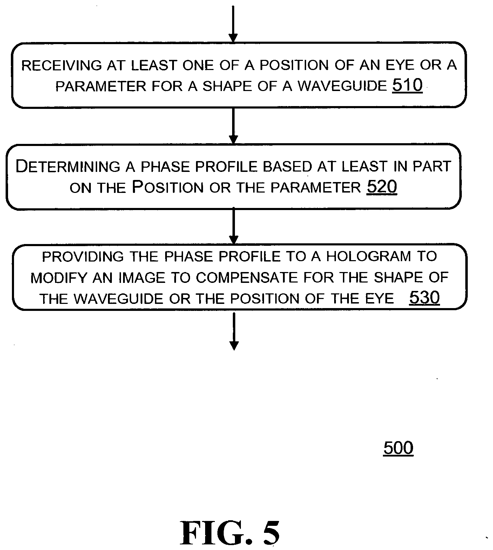

FIG. 5 illustrates an example process for image correction 500 using a phase profile, in accordance with various embodiments. At 510, at least one of a position of an eye or a parameter for a shape of a waveguide is received. At 520, a phase profile may be determined based at least in part on at least one of the eye position or the parameter. At 530, the phase profile may be provided to the reconfigurable phase modulator to modify an image to compensate for the shape of the waveguide or the position of the eye.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted as far as they fall within the scope defined in the appended claims.

## Claims

1. A display device (100), comprising:
a pixel based display system (120);
a reconfigurable spatial light modulator (140), SLM;
a waveguide (150); and
a controller (110),
wherein the reconfigurable SLM (140) is arranged to be illuminated by a pixel-based image (160) provided by the display system and the controller (110) is arranged to dynamically reconfigure the reconfigurable SLM (140) so as to modulate a phase of the pixel-based image (160) based on a parameter for a shape of the waveguide (150), through which the phase-modulated image is displayed, to thereby mitigate for waveguide distortion.

2. The display device (100) of claim 1, wherein the pixel-based image (160) comprises N pixels, an intensity of an Nth pixel determined by a value p_{N}.

3. The display device (100) of claim 1, wherein the parameter for the shape of the waveguide (150) comprises an angle of an incident ray and a waveguide entrance position.

4. The display device (100) of claim 1, wherein the reconfigurable SLM (140) is further configured to divert, divide, or transmit light rays incident thereon.

5. A method (400), comprising:
providing (410) a pixel-based image (160) to illuminate a reconfigurable spatial light modulator (140), SLM;
modulating (420), by using a controller (110) to dynamically reconfigure the reconfigurable SLM (140), a phase of the pixel-based image (160) based on a parameter for a shape of a waveguide (150) to thereby mitigate for waveguide distortion; and
displaying (430) the phase-modulated image through the waveguide (150).

6. The method (400) of claim 5, further comprising receiving the parameter for the shape of the waveguide (150).

7. The method (400) of claim 5, wherein the pixel-based image (160) comprises N pixels, an intensity of an Nth pixel determined by a value p_{N}.

8. The method (400) of claim 5, wherein the parameter for the shape of the waveguide (150) comprises an angle of an incident ray and a waveguide entrance position.

9. The method (400) of claim 5, wherein the reconfigurable SLM (140) is further configured to divert, divide, or transmit light rays incident thereon.

10. A storage machine (204) comprising one or more physical devices configured to hold instructions executable by a logic machine (202) to implement the method (400) of any one of the claims 5 to 9.

## Patentansprüche

1. Anzeigevorrichtung (100), umfassend:
ein pixelbasiertes Anzeigesystem (120);
einen rekonfigurierbaren räumlichen Lichtmodulator (140), SLM;
einen Wellenleiter (150); und
eine Steuerung (110),
wobei der rekonfigurierbare SLM (140) ausgelegt ist, von einem pixelbasierten Bild (160) beleuchtet zu werden, das vom Anzeigesystem bereitgestellt wird, und die Steuerung (110) ausgelegt ist, den rekonfigurierbaren SLM (140) dynamisch zu rekonfigurieren, um basierend auf einem Parameter für eine Form des Wellenleiters (150) eine Phase des pixelbasierten Bildes (160) zu modulieren, durch den das phasenmodulierte Bild angezeigt wird, um dadurch Verzerrung durch den Wellenleiter zu mildern.

2. Anzeigevorrichtung (100) nach Anspruch 1, wobei das pixelbasierte Bild (160) N Pixel umfasst, wobei eine Intensität eines N-ten Pixels durch einen Wert p_{N} bestimmt ist.

3. Anzeigevorrichtung (100) nach Anspruch 1, wobei der Parameter für die Form des Wellenleiters (150) einen Winkel eines einfallenden Strahls und eine Wellenleiter- Eintrittsposition umfasst.

4. Anzeigevorrichtung (100) nach Anspruch 1, wobei der rekonfigurierbare SLM (140) ferner ausgelegt ist, darauf einfallende Lichtstrahlen zu streuen, zu teilen oder durchzulassen.

5. Verfahren (400), umfassend:
Bereitstellen (410) eines pixelbasierten Bildes (160), um einen rekonfigurierbaren räumlichen Lichtmodulator (140), SLM, zu beleuchten;
Modulieren (420) unter Verwendung einer Steuerung (110), um den rekonfigurierbaren SLM (140) dynamisch zu rekonfigurieren, eine Phase des pixelbasierten Bildes (160) basierend auf einem Parameter für die Form des Wellenleiters (150), um dadurch Verzerrung durch den Wellenleiter zu mildern; und
Anzeigen (430) des phasenmodulierten Bildes durch den Wellenleiter (150).

6. Verfahren (400) nach Anspruch 5, das ferner umfasst, den Parameter für die Form des Wellenleiters (150) zu empfangen.

7. Verfahren (400) nach Anspruch 5, wobei das pixelbasierte Bild (160) N Pixel umfasst, wobei eine Intensität eines N-ten Pixels durch einen Wert p_{N} bestimmt ist.

8. Verfahren (400) nach Anspruch 5, wobei der Parameter für die Form des Wellenleiters (150) einen Winkel eines einfallenden Strahls und eine Wellenleiter-Eintrittsposition umfasst.

9. Verfahren (400) nach Anspruch 5, wobei der rekonfigurierbare SLM (140) ferner ausgelegt ist, um darauf einfallende Lichtstrahlen zu streuen, zu teilen oder durchzulassen.

10. Speichermaschine (204), die eine oder mehrere physische Vorrichtungen umfasst, die ausgelegt sind, Instruktionen zu halten, die von einer Logikmaschine (202) ausführbar sind, um das Verfahren (400) nach einem der Ansprüche 5 bis 9 zu implementieren.

## Revendications

1. Dispositif d'affichage (100), comprenant:
un système d'affichage à base de pixels (120);
un modulateur spatial de lumière SLM reconfigurable (140);
un guide d'onde (150); et
un régulateur (110),
dans lequel le SLM reconfigurable (140) est arrangé pour être illuminé par une image à base de pixels (160) fournie par le système d'affichage et le régulateur (110) est arrangé pour reconfigurer dynamiquement le SLM reconfigurable (140) de sorte à moduler une phase de l'image à base de pixels (160) sur la base d'un paramètre d'une forme du guide d'onde (150), par lequel l'image à phase modulée est affichée, pour atténuer ainsi une distorsion de guide d'onde.

2. Dispositif d'affichage (100) selon la revendication 1, dans lequel l'image à base de pixels (160) comprend N pixels, une intensité d'un Nème pixel déterminée par une valeur ρ_{N}.

3. Dispositif d'affichage (100) selon la revendication 1, dans lequel le paramètre de la forme du guide d'onde (150) comprend un angle d'un rayon incident et une position d'entrée de guide d'onde.

4. Dispositif d'affichage (100) selon la revendication 1, dans lequel le SLM reconfigurable (140) est configuré en outre pour dévier, diviser ou transmettre des rayons de lumière qui lui sont incidents.

5. Procédé (400), comprenant:
fournir (410) une image à base de pixels (160) pour illuminer un modulateur spatial de lumière SLM reconfigurable (140);
moduler (420), en utilisant un régulateur (110) pour reconfigurer dynamiquement le SLM reconfigurable (140), une phase de l'image à base de pixels (160) sur la base d'un paramètre d'une forme d'un guide d'onde (150) pour ainsi atténuer une distorsion de guide d'onde; et
afficher (430) l'image à phase modulée par le guide d'onde (150).

6. Procédé (400) selon la revendication 5, comprenant en outre une réception du paramètre de la forme du guide d'onde (150).

7. Procédé (400) selon la revendication 5, dans lequel l'image à base de pixels (160) comprend N pixels, une intensité d'un Nème pixel déterminée par une valeur ρ_{N}.

8. Procédé (400) selon la revendication 5, dans lequel le paramètre de la forme du guide d'onde (150) comprend un angle d'un rayon incident et une position d'entrée de guide d'onde.

9. Procédé (400) selon la revendication 5, dans lequel le SLM reconfigurable (140) est configuré en outre pour dévier, diviser ou transmettre des rayons de lumière qui lui sont incidents.

10. Machine de stockage (204) comprenant un ou plusieurs dispositifs physiques configuré pour contenir des instructions exécutables par une machine logique (202) pour mettre en oeuvre le procédé (400) selon l'une quelconque des revendications 5 à 9.
